# EUROPÄISCHE PATENTSCHRIFT

(11) **EP 0 622 104 B1**
(45) Veröffentlichungstag und Bekanntmachung des Hinweises auf die Patenterteilung: **19.06.1996**
(21) Anmeldenummer: 93118243.0
(22) Anmeldetag: 11.11.1993
(51) Int. Cl.: B01D 46/24

(54) **Vorrichtung zum Filtern von staubbeladenen Gasen**
Device for filtering dust-laden gases
Dispositif de filtrage de gaz chargés de poussières

(30) Priorität: 30.04.1993 DE 4314316
(43) Veröffentlichungstag der Anmeldung: 02.11.1994
(73) Patentinhaber: LURGI LENTJES BABCOCK ENERGIETECHNIK GMBH, D-40549 Düsseldorf (DE)
(72) Erfinder: Rehwinkel, Heiko, Dr., D-46244 Bottrop (DE); Klauke, Friedrich, Dr., D-40878 Ratingen 1 (DE); König, Dieter, Dr., D-45525 Hattingen (DE); Dehn, Günther, D-46485 Wesel (DE)
(74) Vertreter: Müller, Jürgen, Dipl.-Ing.

(56) Entgegenhaltungen:
- EP-A- 0 325 176
- EP-A- 0 428 862
- DE-C- 3 515 365
- US-A- 4 735 638

## Beschreibung

Die Erfindung betrifft eine Vorrichtung zum Filtern von staubbeladenen, insbesondere heißen Gasen mit Hilfe von Filterkerzen nach dem Oberbegriff des Anspruches 1.

Derartige Vorrichtungen sind z. B. aus der DE-OS 34 08 627, DE-PS 35 15 365, EP-OS 04 28 862 bekannt. Die keramischen Filterkerzen dieser Filtervorrichtungen sind hängend angeordnet und mit einem ebenen oder gewölbten Bund versehen, mit dem sie auf einem Aufnahmeelement einer Lochplatte aufliegen. Der gewölbte Bund hat den Vorteil, daß sich die Filterkerze im Betrieb in einem gewissen Maß schräg stellen kann, ohne daß dadurch die Abdichtung zwischen Reingasraum und Rohgasraum beeinträchtigt wird. Die keramischen Filterkerzen der aus der EP-OS 04 28 862 bekannten Vorrichtung stehen auf metallischen Aufnahmeelementen auf, die an einem Reingaskanal geschweißt sind. Die einander berührenden Kontaktflächen von Filterkerze und Aufnahmeelement sind konkav bzw. konvex gewölbt. Aufgrund der unterschiedlich großen linearen Wärmeausdehnungskoeffizienten des keramischen Materials der Filterkerze und des metallischen Materials des Aufnahmeelementes können an den Kontaktflächen Verwerfungen auftreten, so daß eine Gasdichtheit insbesondere bei hohen Temperaturen und damit der geforderte niedrige Reststaubgehalt im Reingas nicht immer sicher erreichbar ist. Außerdem können aufgrund der unterschiedlichen Wärmedehnungen Zwänge in den Kontaktflächen von Filterkerze und Aufnahmeelement entstehen, die zu Rissen in der Filterkerze führen.

Es ist bekannt (EP-OS 04 28 862, US-PS 47 35 638), mineralische Dichtelemente zwischen der keramischen Filterkerze und dem metallischen Aufnahmeelement anzuordnen, um deren unterschiedliche Wärmedehnung aufzufangen. Derartige mineralische Dichtungselemente widerstehen aufgrund ihrer relativ losen, faserigen Struktur den Betriebsbedingungen eines Heißgasfilters, die durch schnelle Druckwechselbeanspruchungen zwischen dem Innenraum der Filterkerze und der umgebenden Gasatmosphäre charakterisiert sind, nicht oder erfordern besondere Konstruktionen. Diese Konstruktionen bestehen aus Federn oder anderen stopfbuchsartigen Verbindungen zwischen der Filterkerze und dem Aufnahmeelement, die den konstruktiven Aufwand der Filtervorrichtung erhöhen und die Montage und Demontage der Filterkerzen erschweren.

Weiterhin sind Anschlußadapter für Filterkerzen bekannt (DE-OS 41 26 320, DE-OS 41 26 324), die in die Aufnahmeöffnung des Aufnahmeelementes eingesetzt und über elastische Dichtelemente abgedichtet sind. Elastische Dichtungselemente aus organischen Materialien sind aber nur gering temperaturbeständig und verbrennen oder pyrolysieren je nach dem Sauerstoffgehalt in dem zu filternden Gas bei den zu erwartenden hohen Gastemperaturen.

Der Erfindung liegt die Aufgabe zugrunde, eine für eine Druckwechselbeanspruchung zwischen Filterkerzeninnenraum und umgebender Gasatmosphäre insbesondere bei hohen Betriebstemperaturen beständige, leicht handhabbare und staubdichte Verbindung zwischen einer keramischen Filterkerze und einem metallischem Aufnahmeelement des Reingasraumes ohne elastische Dichtungselemente zu schaffen.

Diese Aufgabe wird bei einer gattungsgemäßen Vorrichtung erfindungsgemäß durch die kennzeichnenden Merkmale des Anspruches 1 gelöst. Eine vorteilhafte Ausgestaltung der Erfindung ist Gegenstand des Anspruches 2.

Durch das Einfügen des ringförmigen Zwischenstuckes, das den gleichen linearen Wärmeausdehnungskoeffizienten aufweist wie die Filterkerze, stoßen an den gewölbten Auflageflächen zwei Konstruktionselemente aneinander, die ein gleiches Wärmedehnungsverhalten zeigen. Damit ist im Betrieb eine ausreichend große Beweglichkeit der Filterkerze entlang der gewölbten Auflagefläche zum Ausgleich von Herstellungs- und Montageungenauigkeiten gewährleistet. An der Verbindungsstelle des metallischen Aufnahmeelementes des Reingassammlers mit dem Zwischenstück ist aufgrund der unterschiedlich großen Wärmedehnungskoeffizienten dieser Teile nur eine zweidimensionale, ebene Dichtfläche zulässig, so daß Relativdehnungen der beiden Teile zueinander den flächigen Formschluß und damit die Staubdichtheit nicht beeinträchtigen.

Mehrere Ausführungsbeispiele der Erfindung sind in der Zeichnung dargestellt und werden im folgenden näher erläutert. Es zeigen
- Fig. 1: schematisch einen Längsschnitt durch eine Vorrichtung zum Filtern von Gasen;
- Fig. 2: die Draufsicht auf Fig. 1,
- Fig. 3: die Einzelheit Z nach Fig. 1,
- Fig. 4: die Einzelheit Z nach Fig. 1 gemäß einer anderen Ausführungsform und
- Fig. 5: eine hängende Filterkerze.

Die Vorrichtung zum Filtern von staubbeladenen, insbesondere heißen Gasen besteht aus einem zylindrischen Gehäuse 1, das Filterkerzen 2 aufnimmt. Das Gehäuse 1 ist in seinem unteren Teil trichterförmig ausgebildet. Der Trichter 3 dient als Sammelraum für den abgeschiedenen Staub und geht in einen Auslaßstutzen 4 für den Abzug des Staubes über. Das Gehäuse 1 ist mit einem Zuführungsstutzen 5 für die Zuführung von Rohgas versehen und enthält einem Rohgasraum und einen Reingasraum. Der Rohgasraum ist durch den Innenraum 6 des Gehäuses 1 gebildet.

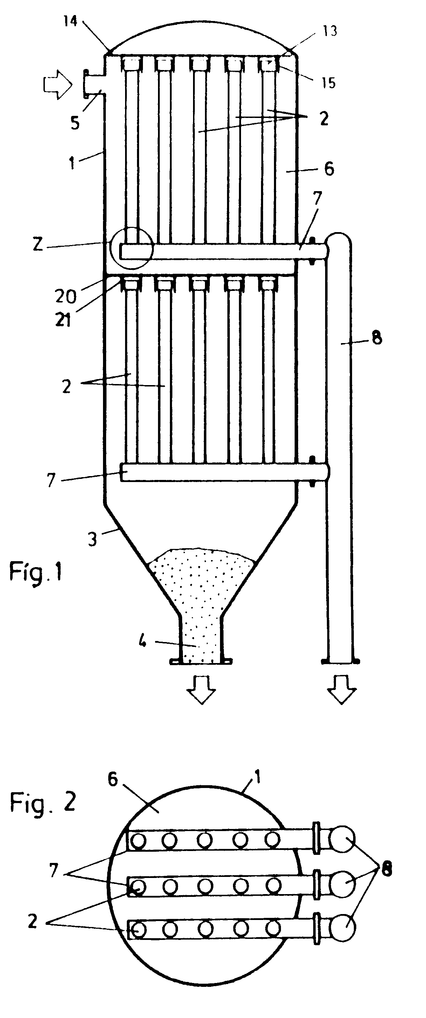

Der Reingasraum ist in dem in den Fig. 1 und 2 dargestellten Fall durch Sammelkanäle 7 gebildet, die innerhalb des Gehäuses 1 angeordnet und durch die Wand des Gehäuses 1 hindurch zu außerhalb des Gehäuses 1 liegenden Abführungsleitungen 8 geführt sind. Mehrere Sammelkanäle 7 sind in einer Ebene nebeneinander und in mehreren Ebenen übereinander angeordnet.

Die Filterkerzen 2 weisen einen Hohlkörper 9 mit einer porösen Wandung auf und bestehen vorzugsweise aus einem keramischen Werkstoff. Unter Umständen können auch Metalle oder Metallverbindungen als Werkstoff zum Einsatz kommen. Der Hohlkörper 9 ist prismatisch mit einer beliebigen Außenkontur und einer vorzugsweise zylindrischen Innenwand. Das eine Ende des Hohlkörpers 9 ist durch einen Deckel 10 verschlossen, während das andere Ende zur Bildung einer Austrittsöffnung offen ist.

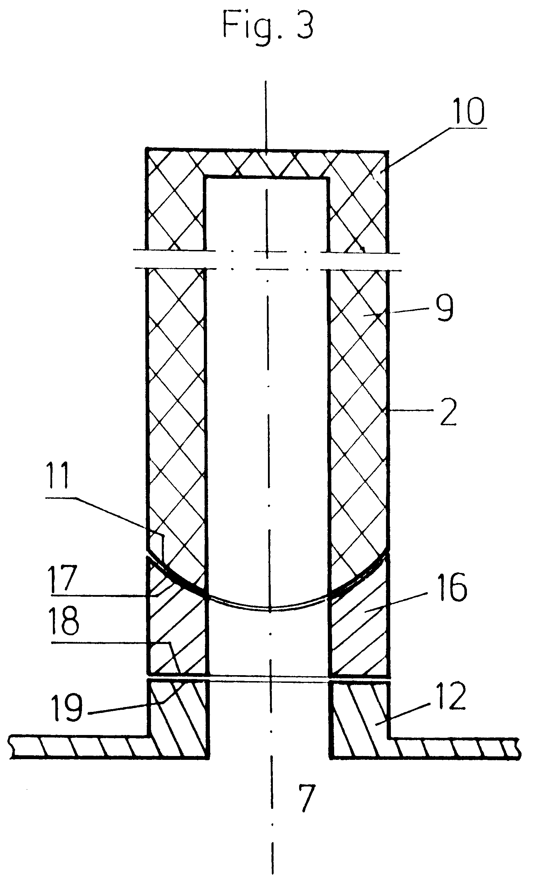

Die Filterkerzen 2 sind in dem Gehäuse 1 derart angeordnet, daß die Außenseite des Hohlkörpers 9 der Rohgasseite zugewandt ist, während der Innenraum des Hohlkörpers 9 mit dem Reingasraum in Verbindung steht. Die die Austrittsöffnung der Filterkerze 2 umgebende Stirnfläche 11 ist als Auflagefläche ausgebildet. Die Filterkerze 2 steht gemäß den Fig. 1 bis 4 auf einem ringförmigen Aufnahmeelement 12 des Reingasraumes in der Weise auf, daß der Deckel 10 nach oben weist und die Filterkerze 2 mit der als Auflagefläche dienenden Stirnfläche 11 aufgrund ihres Eigengewichtes aufruht. Zur Erhöhung der Anpreßkraft können die Filterkerzen 2 durch Auflagegewichte 13 beschwert sein. Oberhalb jeder stehenden Filterkerze 2 sind an einem besonderen Träger 14 Halterungen 15 angebracht. Die Halterungen 15 umgeben das obere, durch den Deckel 10 verschlossene Ende der Filterkerzen 2 mit seitlichem Spiel.

Das ringförmige Aufnahmeelement 12 weist eine Durchgangsöffnung auf, deren Durchmesser dem Innendurchmesser der Filterkerze 2 entspricht. Das Aufnahmeelement 12 besteht aus einem metallischen Werkstoff und ist auf den Sammelkanal 7 aufgeschweißt.

Die Stirnfläche 11 der Filterkerze 2 ist rotationssymmetrisch bearbeitet und vorzugsweise kugelförmig, konvex gewölbt. Zwischen der Filterkerze 2 und dem Aufnahmeelement 12 ist ein Zwischenstück 16 angeordnet. Das Zwischenstück 16 besteht aus einem Werkstoff, dessen linearer Wärmeausdehnungskoeffizient dem des Werkstoffs der Filterkerze 2 entspricht. Vorzugsweise wird für das Zwischenstück 16 der gleiche Werkstoff wie für die Filterkerze 2 verwendet. Die der Filterkerze 2 zugewandte Kontaktfläche 17 des Zwischenstückes 16 ist der Stirnfläche 11 der Filterkerze 2 angepaßt und bei gleichem Kugeldurchmesser konkav gewölbt.

Die einander zugewandten Flächen des Zwischenstückes 16 und des Aufnahmeelementes 12 sind planparallel und dienen als Dichtflächen 18, 19. Diese Dichtflächen 18, 19 erhalten durch das Eigengewicht der Filterkerze 2 und durch das Auflagegewicht 13 eine so hohe Flächenpressung, daß Staubdichtheit zwischen dem Aufnahmeelement 12 und dem Zwischenstück 16 erreicht wird. Entlang der Dichtflächen 18, 19 können das Zwischenstück 16 und das Aufnahmeelement 12 in allen horizontalen Richtungen relativ zueinander frei gleiten. Aufgrund dieser frei beweglichen Anordnung der Dichtflächen 18, 19 können die sich aus den unterschiedlichen Werkstoffen resultierenden unterschiedlich großen Wärmedehnungen von Zwischenstück 16 und Aufnahmeelement 12 spannungsfrei nach allen Raumrichtungen abbauen. Die Planparallelität der Dichtflächen 18, 19 bleibt dennoch erhalten, so daß die Staubdichtheit auch bei hohen Temperaturen oder bei Temperaturänderungen gewährleistet ist.

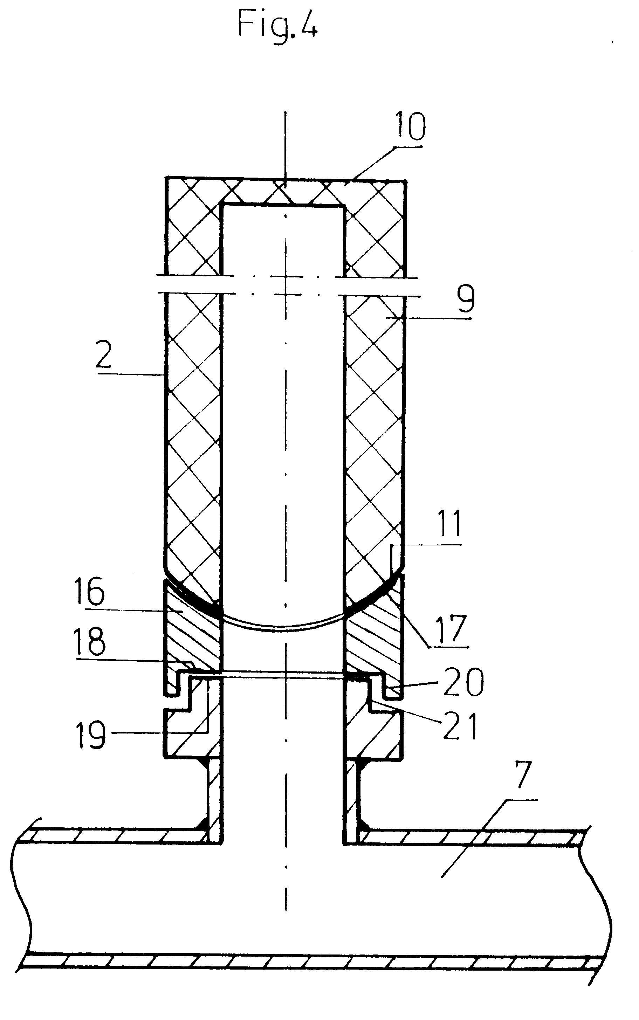

Gemäß Fig. 4 sind das Aufnahmeelement 12 und das Zwischenstück 16 mit jeweils einer Ringschulter 20, 21 versehen. Der radiale Abstand der Ringschultern 20, 21 voneinander ist gerade so groß wie oder etwas größer als der im Betrieb auftretende maximale Betrag der relativen Wärmedehnung von Zwischenstück 16 und Aufnahmeelement 12. Auf diese Weise wird eine seitliche Führung erreicht, ohne daß die freie Beweglichkeit behindert wird.

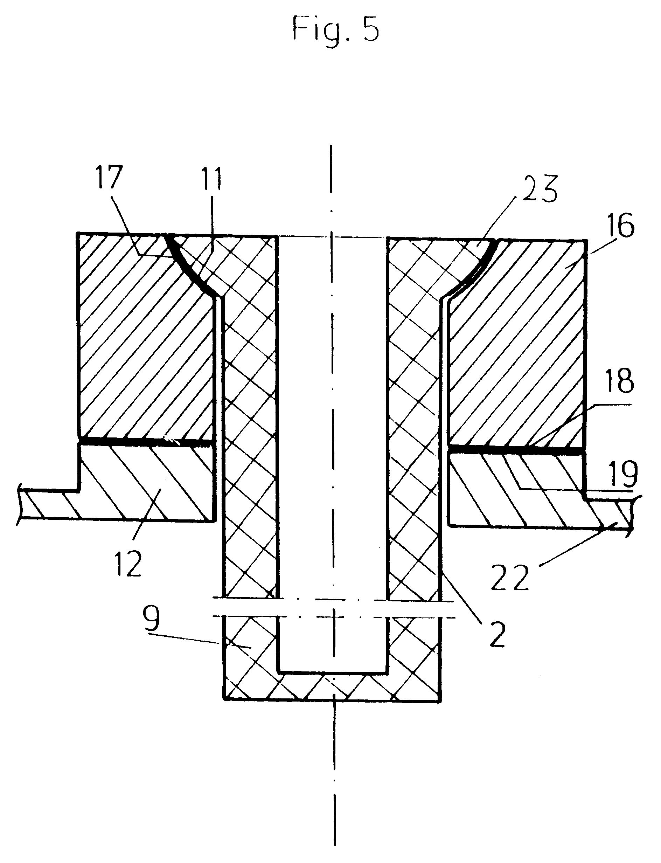

In der Fig. 5 ist eine Filterkerze 2 gezeigt, die mit seitlichem Spiel in eine Lochplatte 22 eingehängt ist. Diese Lochplatte 22 trennt den Rohgasraum der Filtervorrichtung von deren Reingasraum und ist mit den Aufnahmeelementen 12 bestückt. Die Filterkerze 2 ist an ihrem oberen, offenen Ende mit einem Bund 23 versehen, der mit einer kugelförmig gewölbten Auflagefläche auf einer angepaßten Kontaktfläche 17 des Zwischenstückes 16 aufliegt. Auch bei dieser Anordnung sind die einander zugewandten Dichtflächen 18, 19 des Zwischenstückes 16 und des Aufnahmeelementes 12 planparallel.

## Patentansprüche

1. Vorrichtung zum Filtern von staubbeladenen, insbesondere heißen, Gasen mit Hilfe von im wesentlichen vertikal ausgerichteten Filterkerzen (2), die in einem geschlossenen, einen Rohgasraum und einen Reingasraum aufweisenden Gehäuse (1) angeordnet sind und aus einem porösen, mindestens eine stirnseitige Austrittsöffnung aufweisenden, im übrigen geschlossenen Hohlkörper (9) bestehen, dessen Austrittsöffnung mit dem Reingasraum verbunden ist, wobei die die Austrittsöffnung umschließende Stirnfläche bzw. die die Austrittsöffnung umgebende Seitenwandung (11) der Filterkerze (2) als eine vorzugsweise konvex gewölbte Auflagefläche ausgebildet ist, an der Trennwand zwischen Rohgasraum und Reingasraum für jede Filterkerze ein Aufnahmeelement (12) vorgesehen ist, zwischen dem Aufnahmeelement und der als Auflagefläche ausgebildeten Stirnfläche bzw. Seitenwandung (11) der Filterkerze (2) ein ringförmiges Zwischenstück (16) angeordnet ist, welches auf der einen Seite eine der als Auflagefläche ausgebildeten Stirnfläche bzw. Seitenwandung (11) der Filterkerze (2) angepaßte Kontaktfläche (17) aufweist, und die einander zugewandten Seiten (18, 19) des Zwischenstücks (16) und des Aufnahmeelements (12) horizontal ausgerichtet sind,
dadurch gekennzeichnet daß der lineare Wärmeausdehnungskoeffizient des Zwischenstücks (16) weitgehend dem der Filterkerze (2) entspricht und daß die einander zugewandten Seiten des Zwischenstücks (16) und des Aufnahmeelementes (12) planparallele Dichtflächen (18, 19) bilden, entlang denen das Aufnahmeelement (12) und das Zwischenstück (16) horizontal aufeinander gleitbar sind.

2. Vorrichtung nach Anspruch 1, dadurch gekennzeichnet, daß das Zwischenstück (16) und das Aufnahmeelement (12) mit einander gegenüberstehenden vertikalen Führungen (20, 21) versehen sind und daß der Abstand der Führungen (20, 21) voneinander mindestens der maximal auftretenden horizontalen Differenz der Wärmedehnungen des Zwischenstückes (16) und des Aufnahmeelementes (12) entspricht.

## Claims

1. Device for the filtering of dust-laden and in particular hot gases with the aid of substantially vertically oriented filter cartridges (2), which are arranged in a closed housing (1) displaying a raw gas chamber and a pure gas chamber and consist of a porous hollow body (9), which displays at least one exit opening at an end face and is closed for the remainder and the exit opening of which is connected with the pure gas chamber, wherein the end face surrounding the exit opening or that side wall (11) of the filter cartridge (2), which surrounds the exit opening, is formed as a preferably convexly curved bearing surface, a receptacle element (12) is provided for each filter cartridge at the partition between the raw gas chamber and the pure gas chamber, an annular intermediate member (16) is arranged between the receptacle element and that end face or side wall (11) of the filter cartridge (2), which is formed as bearing surface, and on the one side displays a contact surface (17), which is matched to the end face or side wall (11) of the filter cartridge (2), which is formed as bearing surface, and the mutually facing sides (18, 19) of the intermediate member (16) and of the receptacle element (12) are oriented horizontally, characterised thereby, that the linear thermal coefficient of expansion of the intermediate member (16) largely corresponds with that of the filter cartridge (2) and that the mutually facing sides of the intermediate member (16) and of the receptacle element (12) form planar parallel sealing surfaces (18, 19), along which the intermediate member (16) and of the receptacle element (12) are slidable one on the other.

2. Device according to claim 1, characterised thereby, that the intermediate member (16) and of the receptacle element (12) are provided with vertical guides (20, 21), which stand one opposite the other, and that the spacing of the guides (20, 21) one from the other corresponds with at least the maximally occurring horizontal difference between the thermal expansions of the intermediate member (16) and of the receptacle element (12).

## Revendications

1. Dispositif de filtration de gaz chargés en poussières, en particulier de gaz chauds, à l'aide de bougies filtrantes (2), orientées verticalement, disposées dans un carter (1) fermé, présentant une enceinte à gaz bruts et une enceinte à gaz épurés, et les bougies filtrantes étant constituées d'un corps creux (9) poreux, présentant au moins une ouverture de sortie du côté frontal et fermé pour le reste, corps creux dont l'ouverture de sortie est reliée à l'enceinte à gaz épurés, la face frontale enclosant l'ouverture de sortie, respectivement la paroi latérale (11), entourant l'ouverture de sortie de la bougie filtrante (2) étant réalisée sous la forme d'une surface de pose à incurvation de préférence convexe, un élément support (12) étant prévu pour chaque bougie filtrante sur la paroi de séparation entre enceinte à gaz bruts et enceinte à gaz épurés, une pièce intermédiaire (16) annulaire étant disposée entre l'élément support et la face frontale ou de la paroi latérale (11) de la bougie filtrante (2) réalisée sous forme de surface de pose, cette pièce intermédiaire (16) présentant sur un côté une surface de contact (17) adaptée à cette face frontale, respectivement à cette paroi latérale (11), les faces (18, 19), tournées l'une vers l'autre de la pièce intermédiaire (16) et de l'élément support (12) étant orientées horizontalement,
caractérisé en ce que le coefficient de dilatation thermique linéaire de la pièce intermédiaire (16) correspond notablement à celui de la bougie filtrante (2) et en ce que les faces, tournées l'une vers l'autre, de la pièce intermédiaire (16) et de l'élément support (12) constituent des surfaces d'étanchéité (18, 19) planes et parallèles, le long desquelles l'élément support (12) et la pièce intermédiaire (16) sont susceptibles de coulisser horizontalement l'un sur l'autre.

2. Dispositif selon la revendication 1, caractérisé en ce que la pièce intermédiaire (16) et l'élément support (11) sont pourvus de guidages (20, 21) verticaux opposés l'un à l'autre, et en ce que l'espacement mutuel entre les guidages (20, 21) correspond au moins à la différence horizontale maximale se produisant entre la pièce intermédiaire (16) et l'élément support (12), du fait des dilatations thermiques.
